# EUROPEAN PATENT APPLICATION

(11) **EP 4 613 093 A1**
(43) Date of publication of application: **10.09.2025**
(21) Application number: 23911769.0
(22) Date of filing: 14.12.2023
(51) Int. Cl.: A01K 61/80

(54) **RESIDUAL FEED RECOVERY DEVICE**

(30) Priority: 26.12.2022 JP 2022208865
(71) Applicant: Softbank Corp., Tokyo 105-7529 (JP)
(72) Inventor: ISHIWAKA, Yuko, Tokyo 105-7529 (JP); YOSHIDA, Tomohiro, Tokyo 105-7529 (JP); TONE, Tadayuki, Tokyo 105-7529 (JP); YASUI, Gaku, Tokyo 105-7529 (JP)
(74) Representative: SSM Sandmair
(86) International application number: PCT/JP2023/044942
(87) International publication number: WO 2024/142988

(57) **Abstract**

A residual feed recovery device according to an embodiment includes a collection portion and a recovery portion. The collection portion is attached below a fish pen provided in water, and becomes narrower as it goes downward. The recovery portion can recover residual feed that has passed through the fish pen and gathered by the collection portion, and is attachable to and detachable from the collection portion. In the recovery portion, an opening into which the residual feed enters from the collection portion is formed. The recovery portion includes a backflow prevention valve. The backflow prevention valve prevents the recovered residual feed from coming out from the opening toward the collection portion.

## Description

### Field

A disclosed embodiment relates to a residual feed recovery device.

### Background

Conventionally, there has been known a residual feed recovery device that collects leftovers of feed (hereinafter, referred to as "residual feed") fed to fish farmed in a fish pen (see, for example, Patent Literature 1) .

### Citation List

### Patent Literature

Patent Literature 1: JP H5-276849 A

### Summary

### Technical Problem

However, in the device of the conventional art, the collected residual feed is discharged to the outside of the residual feed recovery device. In the device of the conventional art, for example, the residual feed may flow out from the residual feed recovery device to a fish pen side due to the flow in the water, and there is room for improvement in the recoverability of the residual feed.

The present invention has been made in view of the above, and an object is to provide a residual feed recovery device that improves the recoverability of residual feed.

### Solution to Problem

A residual feed recovery device according to an embodiment includes a collection portion and a recovery portion. The collection portion is attached below a fish pen provided in water, and becomes narrower as it goes downward. The recovery portion can recover residual feed that has passed through the fish pen and gathered by the collection portion, and is attachable to and detachable from the collection portion. In the recovery portion, an opening into which the residual feed enters from the collection portion is formed. The recovery portion includes a backflow prevention valve. The backflow prevention valve prevents the recovered residual feed from coming out from the opening toward the collection portion. Advantageous Effects of Invention

According to one aspect of the embodiment, the recoverability of residual feed can be improved.

### Brief Description of Drawings

FIG. 1 is a schematic view illustrating a state in which a residual feed recovery device according to an embodiment is attached to a fish pen.
FIG. 2 is a perspective view of the residual feed recovery device.
FIG. 3 is a schematic view illustrating a part of the residual feed recovery device as viewed from direction A in FIG. 2.
FIG. 4 is a plan view schematically illustrating a part of the residual feed recovery device.
FIG. 5 is a perspective view of a recovery portion.
FIG. 6 is a view illustrating a state in which a collection portion is closed.
FIG. 7 is a view illustrating a state in which the recovery portion is attached to and detached from the collection portion.
FIG. 8 is a view describing a method of attaching a recovery portion and a collection portion of a residual feed recovery device according to a modification. Description of Embodiments

Hereinafter, a mode for carrying out the residual feed recovery device according to the present application (hereinafter, referred to as an "embodiment") will be described in detail with reference to the drawings. Note that the residual feed recovery device according to the present application is not limited to this embodiment.

Hereinafter, a direction parallel to the vertical direction will be described as an up-down direction. A downward direction coincides with the vertical direction. An upward direction is a direction opposite to the vertical direction.

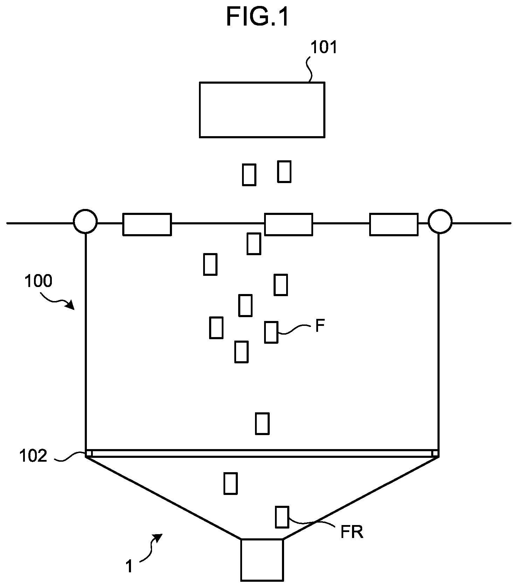

A residual feed recovery device 1 according to the embodiment will be described with reference to FIG. 1. FIG. 1 is a schematic view illustrating a state in which the residual feed recovery device 1 according to the embodiment is attached to a fish pen 100.

The residual feed recovery device 1 is attached below the fish pen 100 provided in water. Fish are placed and farmed in the fish pen 100. The fish pen 100 is provided in the sea. The fish pen 100 may be provided in a lake or the like. The fish in the fish pen 100 are fed with feed F by an automatic feeder 101, for example. The automatic feeder 101 drops the feed F into the fish pen 100. Note that the feed F may be dropped by a person instead of the automatic feeder 101.

The feed F dropped into the fish pen 100 is eaten by the fish. Residual feed FR desired to be eaten by the fish passes through the fish pen 100 and sinks downward. The residual feed recovery device 1 recovers the residual feed FR that has passed through the fish pen 100. By recovering the residual feed FR, the growth degree of the fish, the appropriate amount of the feed F dropped into the fish pen 100, and the like can be examined.

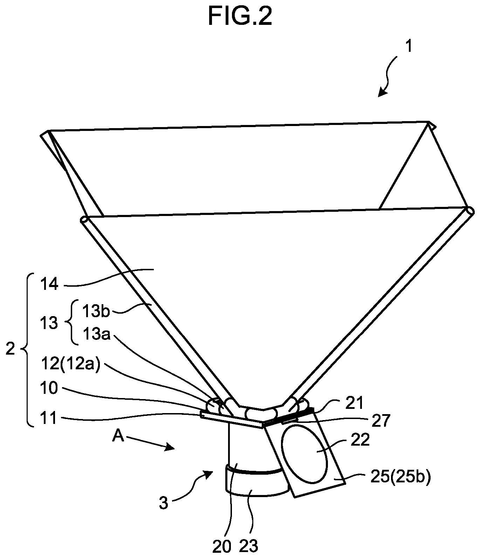

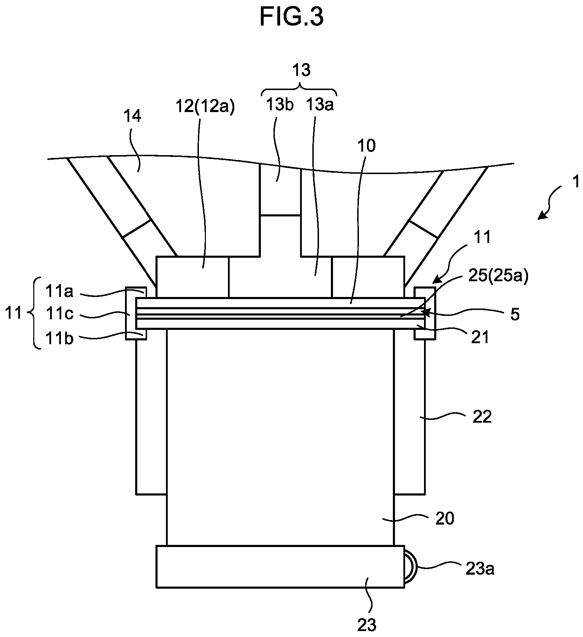

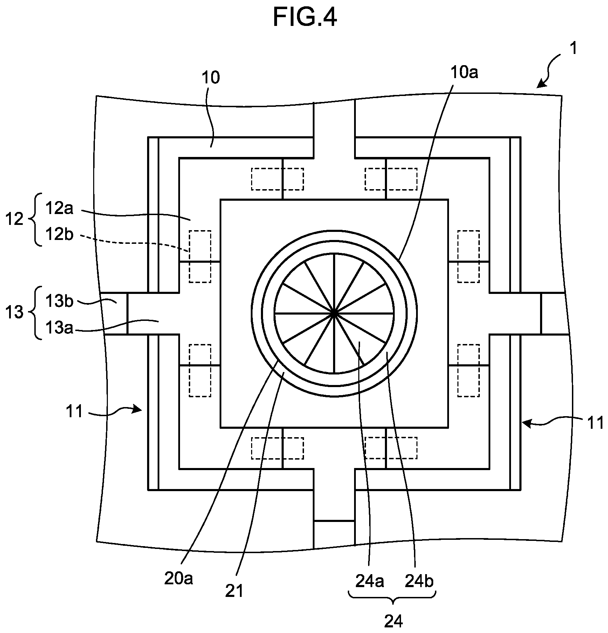

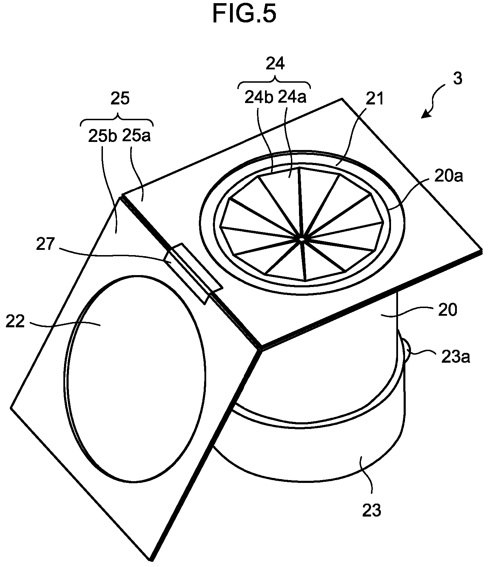

Next, the residual feed recovery device 1 will be described in detail with reference to FIGS. 2 to 5. FIG. 2 is a perspective view of the residual feed recovery device 1. FIG. 3 is a schematic view illustrating a part of the residual feed recovery device 1 as viewed from direction A in FIG. 2. FIG. 4 is a plan view schematically illustrating a part of the residual feed recovery device 1. FIG. 5 is a perspective view of a recovery portion 3. In FIG. 4, a sheet portion 14 is omitted for the sake of description.

Hereinafter, the residual feed recovery device 1 attached to the fish pen 100 (see FIG. 1) having a rectangular shape in a cross section orthogonal to the up-down direction will be described as an example, but it is not limited thereto. The fish pen 100 may have, for example, a circular shape in a cross section orthogonal to the up-down direction.

The residual feed recovery device 1 includes a collection portion 2 and the recovery portion 3. The collection portion 2 is attachable to and detachable from the fish pen 100. The collection portion 2 is attached below the fish pen 100 by a plurality of attachment portions 102 (see FIG. 1). The collection portion 2 becomes narrower as it goes downward. The attachment portions 102 are, for example, carabiners. The collection portion 2 includes a support plate 10, attachment frames 11, a rotation support portion 12, strut portions 13, and the sheet portion 14.

The support plate 10 is formed in a rectangular shape. A hole 10a is formed in the support plate 10. The hole 10a is formed, for example, near the center of the support plate 10. The support plate 10 is made of, for example, metal such as aluminum.

The attachment frames 11 are attached to the support plate 10. The attachment frames 11 are formed so as to extend along a side orthogonal to the up-down direction of the support plate 10. A pair of attachment frames 11 is provided so as to face each other in a direction orthogonal to the up-down direction. The attachment frame 11 is formed to have a substantially U shape in a cross section orthogonal to the direction extending along the side of the support plate 10. The recovery portion 3 is attached to the attachment frames 11. The attachment frame 11 includes a first wall portion 11a, a second wall portion 11b, and a third wall portion 11c. The attachment frame 11 is made of, for example, metal such as aluminum.

The first wall portion 11a is attached to the support plate 10. The first wall portion 11a is attached to the support plate 10 with a lower surface being in contact with the support plate 10. The second wall portion 11b is provided below the first wall portion 11a. The second wall portion 11b is provided so as to face the first wall portion 11a. The third wall portion 11c connects the first wall portion 11a and the second wall portion 11b.

The attachment frame 11 is formed such that a gap is formed between the second wall portion 11b and the support plate 10. The gap formed between the second wall portion 11b and the support plate 10 is an insertion groove 5 into which an attachment plate 21 of the recovery portion 3 described below is inserted. That is, the attachment frames 11 form the insertion grooves 5 into which the attachment plate 21 of the recovery portion 3 is inserted.

Note that the attachment frame 11 may be attached to the support plate 10 with an upper surface of the first wall portion 11a being in contact with the support plate 10. In this case, a gap between the first wall portion 11a and the second wall portion 11b forms the insertion groove 5.

In addition, the support plate 10 and the attachment frame 11 may be integrally provided. In this case, for example, end portions on both end sides of the support plate 10 are bent to form the attachment frames 11.

The rotation support portion 12 is attached to the support plate 10. The rotation support portion 12 is attached to an upper surface of the support plate 10. The rotation support portion 12 rotatably supports the strut portions 13.

For example, the rotation support portion 12 rotatably supports four strut portions 13. The rotation support portion 12 includes joints 12a having a substantially L shape and rotation shaft portions 12b. Four joints 12a are provided. The joints 12a are disposed at four corners of the rectangular shape. The joint 12a is disposed such that an end portion faces an end portion of another joint 12a. The joints 12a are formed in a hollow shape. The rotation shaft portions 12b are press-fitted into the joints 12a. For example, the rotation shaft portions 12b are press-fitted to the joints 12a to such an extent as to be rotatable. The rotation shaft portions 12b may be press-fitted to the joints 12a so as not to be rotatable.

The strut portions 13 are rotatably provided on the rotation support portion 12. The strut portions 13 are rotatably supported on the rotation support portion 12. For example, the strut portions 13 are made of polyvinyl chloride. The strut portions 13 are attached to a lower end of the fish pen 100 by the attachment portions 102. In a state where the strut portions 13 are attached to the fish pen 100, the strut portions 13 are provided so as to extend obliquely upward from the rotation support portion 12. A plurality of strut portions 13 is provided. For example, four strut portions 13 are provided. In a state where the strut portions 13 are attached to the fish pen 100, a region surrounded by the four strut portions 13 becomes narrower as it goes downward. The region surrounded by the four strut portions 13 is a region on a plane orthogonal to the up-down direction.

The strut portion 13 includes a joint 13a having a substantially T shape and a support column 13b. The joints 13a are formed in a hollow shape. The joints 13a are rotatably supported on the rotation shaft portions 12b of the rotation support portion 12. The rotation shaft portions 12b of the rotation support portion 12 are press-fitted into the joints 13a. The joints 13a (strut portions 13) are press-fitted to the rotation shaft portions 12b to such an extent that the joints 13a (strut portions 13) can rotate with respect to the rotation shaft portions 12b.

The support columns 13b are press-fitted into the joints 13a. The support columns 13b are formed in, for example, a tubular shape or a columnar shape. The support columns 13b are attached to the lower end of the fish pen 100 by the attachment portions 102. In a state where the strut portions 13 are attached to the fish pen 100, the support columns 13b are provided so as to extend obliquely upward from the joints 13a.

The sheet portion 14 is attached to the strut portions 13. The sheet portion 14 is opened and closed according to the rotation of the strut portions 13. The sheet portion 14 is attached to the support columns 13b of the strut portions 13. When the collection portion 2 is attached to the fish pen 100, the sheet portion 14 is provided so as to cover the lower side of the fish pen 100. The sheet portion 14 is provided so that the residual feed FR (see FIG. 1) that has passed through the fish pen 100 gathers in the recovery portion 3.

In a state where the collection portion 2 is attached to the fish pen 100, the sheet portion 14 is provided so as to be narrower as it goes downward. That is, the collection portion 2 is provided so as to be narrower as it goes downward. Specifically, regarding the sheet portion 14, in a state where the collection portion 2 is attached to the fish pen 100, a region surrounded by the sheet portion 14 becomes narrower as it goes downward. The region surrounded by the sheet portion 14 is a region on a plane orthogonal to the up-down direction. That is, in a state where the collection portion 2 is attached to the fish pen 100, the area surrounded by the sheet portion 14 in the direction orthogonal to the up-down direction decreases as it goes downward.

A plurality of holes is formed in the sheet portion 14. The size of the plurality of holes is smaller than the size of the residual feed FR. That is, the plurality of holes is formed so that the residual feed FR does not pass through the holes. For example, the sheet portion 14 is a net.

The recovery portion 3 recovers the residual feed FR that has passed through the fish pen 100 and gathered by the collection portion 2. The recovery portion 3 is attachable to and detachable from the collection portion 2. The recovery portion 3 includes a body portion 20, the attachment plate 21 (insertion portion), an upper lid portion 22 (lid portion), a lower lid portion 23, a backflow prevention valve 24, and a fixation portion 25.

The body portion 20 is formed in a cylindrical shape. In the body portion 20, a first opening 20a and a second opening are formed. The first opening 20a is formed at an upper end of the body portion 20. The second opening is formed at a lower end of the body portion 20. The residual feed FR gathered by the collection portion 2 enters the body portion 20.

The attachment plate 21 is provided at the upper end of the body portion 20. The attachment plate 21 is provided so as to extend outward in a radial direction of the body portion 20 from a peripheral edge of the upper end of the body portion 20. The attachment plate 21 has a rectangular outer shape. The attachment plate 21 can be inserted into the insertion grooves 5. The recovery portion 3 is attached to the collection portion 2 when the attachment plate 21 is inserted into the insertion grooves 5.

The upper lid portion 22 is rotatably attached to the attachment plate 21 via an attachment member 27 to the attachment plate 21. The attachment member 27 is configured to connect an end portion of the upper lid portion 22 and an end portion of the attachment plate 21. The attachment member 27 is, for example, a hinge.

The upper lid portion 22 rotates with respect to the attachment plate 21 so that the first opening 20a of the body portion 20 can be blocked. The upper lid portion 22 has a plate shape. The upper lid portion 22 has a rectangular shape. The state in which the upper lid portion 22 blocks the first opening 20a is a closed state in which the first opening 20a is closed.

A state in which the upper lid portion 22 does not block the first opening 20a, for example, a state in which the upper lid portion 22 has rotated so as to face an outer peripheral wall of the body portion 20 from the closed state is an open state in which the first opening 20a is not closed.

The lower lid portion 23 is attached to the lower end of the body portion 20. The lower lid portion 23 is attachable to and detachable from the body portion 20. For example, threaded portions that mesh with each other are formed on an inner peripheral wall of the lower lid portion 23 and an outer peripheral wall on a lower portion of the body portion 20. The second opening of the body portion 20 is blocked when the lower lid portion 23 is attached to the body portion 20. The lower lid portion 23 is provided with a hook 23a. When the recovery portion 3 is removed from the collection portion 2 and conveyed underwater, a floating member such as an aqua lifter is put on the hook 23a.

The backflow prevention valve 24 is provided in the first opening 20a. The backflow prevention valve 24 is configured to prevent the residual feed FR recovered in the body portion 20 from coming out from the first opening 20a toward the collection portion 2 side. The backflow prevention valve 24 includes a plurality of valve bodies 24a. The valve bodies 24a are formed so as to protrude from a frame body 24b having a ring shape toward the center of the first opening 20a. The width of the valve body 24a decreases toward the center of the first opening 20a. For example, the valve body 24a is formed in a triangular shape. The plurality of valve bodies 24a is provided side by side along a circumferential direction of the first opening 20a. A distal end of the valve body 24a is curved downward from the frame body 24b. The backflow prevention valve 24 is formed of an elastic member. For example, the backflow prevention valve 24 is made of resin such as rubber or silicon.

When the first opening 20a is blocked by the upper lid portion 22, the fixation portion 25 holds the blocked state (closed state) of the first opening 20a. The fixation portion 25 is a lock mechanism that fixes the upper lid portion 22 and the attachment plate 21 in a closed state where the first opening 20a is blocked by the upper lid portion 22.

The fixation portion 25 is hook-and-loop fasteners 25a and 25b. One hook-and-loop fastener 25a is attached to an upper surface of the attachment plate 21. The other hook-and-loop fastener 25b is attached to the upper lid portion 22.

Note that the fixation portion 25 is not limited to the hook-and-loop fasteners 25a and 25b. The fixation portion 25 may be a claw portion provided on one of the upper lid portion 22 and the attachment plate 21 and an engagement portion provided on the other of the upper lid portion 22 and the attachment plate 21. The claw portion engages with the engagement portion, whereby the first opening 20a is held in a state of being blocked by the upper lid portion 22.

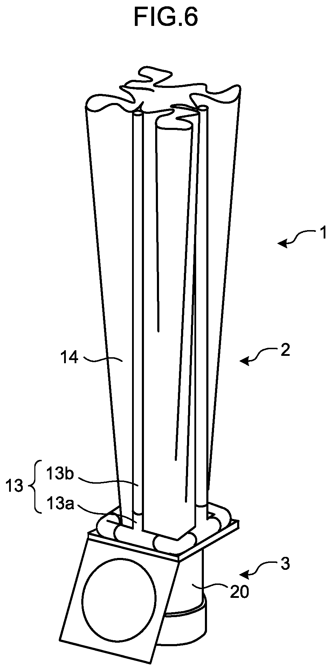

The collection portion 2 of the residual feed recovery device 1 can be opened and closed. Specifically, as the strut portions 13 are rotated, the strut portions 13 and the sheet portion 14 are rotated, and the collection portion 2 is opened and closed. That is, the sheet portion 14 is opened and closed. When the strut portions 13 are rotated in the central axis direction of the body portion 20, the collection portion 2 is brought into the closed state as illustrated in FIG. 6. FIG. 6 is a view illustrating a state in which the collection portion 2 is closed. When the collection portion 2 is in the closed state, conveyance is facilitated. For example, closing the collection portion 2 facilitates conveyance of the residual feed recovery device 1 (collection portion 2) in water. Accordingly, for example, a worker (diver) can easily perform the attachment work when attaching the residual feed recovery device 1 to the fish pen 100. In addition, even when the residual feed recovery device 1 is conveyed on the land, a worker (conveyor) can easily perform the conveyance work.

When the residual feed recovery device 1 is attached to the fish pen 100, the collection portion 2 is opened as illustrated in FIG. 2 by rotating the strut portions 13 from the closed state of the collection portion 2. In a state in which the collection portion 2 is opened, each of the strut portions 13 is attached to the fish pen 100, whereby the residual feed recovery device 1 is attached to the fish pen 100.

When the feed F is dropped into the fish pen 100 in a state where the residual feed recovery device 1 is attached to the fish pen 100, the residual feed FR passes through the fish pen 100 and enters the collection portion 2. The residual feed FR that has entered the collection portion 2 is gathered by the sheet portion 14. The residual feed FR gathered by the sheet portion 14 passes through the hole 10a of the support plate 10 and falls toward the first opening 20a formed in the body portion 20 of the recovery portion 3.

The residual feed FR that has fallen to the first opening 20a pushes down the valve bodies 24a of the backflow prevention valve 24 by its own weight or the like and enters the body portion 20 of the recovery portion 3. The residual feed FR that has entered the body portion 20 is prevented from coming out from the body portion 20 to the collection portion 2 by the backflow prevention valve 24. For example, even in a case where the sea water flows into the body portion 20 by a tidal current, the residual feed FR is prevented from coming out from the body portion 20 by the backflow prevention valve 24.

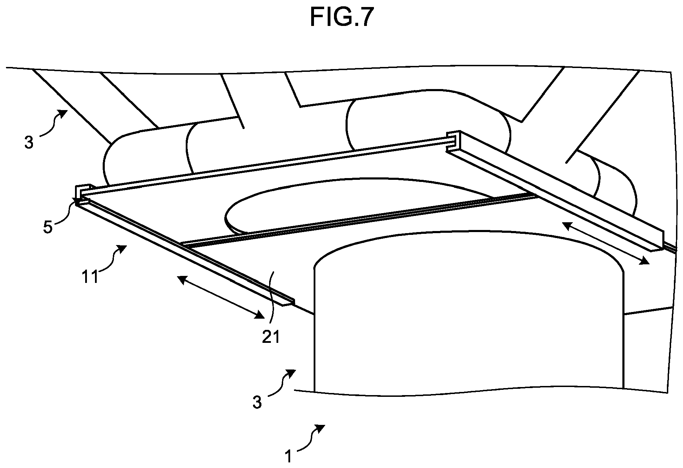

In the residual feed recovery device 1, as indicated by the arrows in FIG. 7, the recovery portion 3 is attached to and detached from the collection portion 2 by sliding the attachment plate 21 of the recovery portion 3 into the insertion grooves 5 of the collection portion 2. FIG. 7 is a view illustrating a state in which the recovery portion 3 is attached to and detached from the collection portion 2. The recovery portion 3 is attachable to and detachable from the collection portion 2 in a state where the collection portion 2 is attached to the fish pen 100. Therefore, the recovery portion 3 is removed from the collection portion 2, and only the recovery portion 3 is conveyed, so that the recovery amount of the residual feed FR can be examined.

When the amount of the residual feed FR is examined, the first opening 20a of the recovery portion 3 removed from the collection portion 2 is blocked by the upper lid portion 22. The upper lid portion 22 is conveyed in a state of being fixed to the attachment plate 21 by the fixation portion 25. Therefore, when the recovery portion 3 is conveyed, the residual feed FR in the recovery portion 3 is prevented from flowing out of the recovery portion 3.

When the lower lid portion 23 of the conveyed recovery portion 3 is removed from the body portion 20, the residual feed FR can be easily taken out from the recovery portion 3.

The residual feed recovery device 1 includes the collection portion 2 and the recovery portion 3. The collection portion 2 is attached below the fish pen 100 provided in water, and becomes narrower as it goes downward. The recovery portion 3 recovers the residual feed FR that has passed through the fish pen 100 and gathered by the collection portion 2. The recovery portion 3 is attachable to and detachable from the collection portion 2. In the recovery portion 3, the first opening 20a into which the residual feed FR enters from the collection portion 2 is formed. The recovery portion 3 includes the backflow prevention valve 24. The backflow prevention valve 24 prevents the recovered residual feed FR from coming out from the first opening 20a toward the collection portion 2.

As a result, the residual feed recovery device 1 can prevent the residual feed FR recovered by the recovery portion 3 from flowing out of the recovery portion 3. Therefore, the residual feed recovery device 1 can improve the recoverability of the residual feed FR. In addition, since the recoverability of the residual feed FR is improved, the dropped feed F can be suitably adjusted depending on the residual feed FR. The residual feed recovery device 1 can prevent the unnecessary feed F from being dropped.

The recovery portion 3 includes the body portion 20 and the upper lid portion 22. In the body portion 20, the first opening 20a is formed. The upper lid portion 22 can block the first opening 20a.

As a result, when the recovery portion 3 is removed from the collection portion 2 and conveyed, the recovery portion 3 can prevent the residual feed FR from flowing out of the recovery portion 3. The residual feed recovery device 1 can improve the recoverability of the residual feed FR.

The recovery portion 3 includes the fixation portion 25. When the first opening 20a is blocked by the upper lid portion 22, the fixation portion 25 holds the blocked state of the first opening 20a.

As a result, when the recovery portion 3 is removed from the collection portion 2 and conveyed, the recovery portion 3 can prevent the upper lid portion 22 from being opened. Therefore, the recovery portion 3 can prevent the residual feed FR from flowing out of the recovery portion 3. The residual feed recovery device 1 can improve the recoverability of the residual feed FR.

The collection portion 2 can be opened and closed. As a result, when the residual feed recovery device 1 is conveyed, the worker can perform conveyance in a state where the collection portion 2 is closed. Therefore, the residual feed recovery device 1 can be easily conveyed. For example, when the residual feed recovery device 1 is attached to the fish pen 100, the worker (diver) can easily convey the residual feed recovery device 1 in the sea. Therefore, the residual feed recovery device 1 can reduce the load in the attachment work of the worker.

The collection portion 2 includes the rotation support portion 12, the strut portions 13, and the sheet portion 14. The strut portions 13 are rotatably provided on the rotation support portion 12. The sheet portion 14 is attached to the strut portions 13 and opened and closed according to the rotation of the strut portions 13.

As a result, the collection portion 2 can switch between opening and closing by rotating the strut portions 13. Therefore, the worker can easily open and close the collection portion 2.

The collection portion 2 includes the attachment frames 11. The attachment frames 11 form the insertion grooves 5. The recovery portion 3 includes the attachment plate 21. The attachment plate 21 can be inserted into the insertion grooves 5.

As a result, the worker can attach and detach the recovery portion 3 to and from the collection portion 2 by sliding the attachment plate 21 of the recovery portion 3 into the insertion grooves 5. Therefore, the worker can easily attach and detach the recovery portion 3.

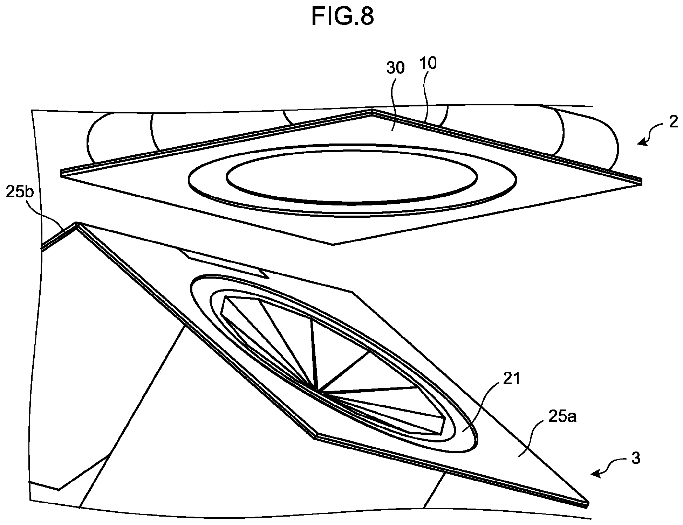

As illustrated in FIG. 8, the residual feed recovery device 1 according to a modification may attach the recovery portion 3 to the collection portion 2 by hook-and-loop fasteners 25a and 30. FIG. 8 is a view describing a method of attaching the recovery portion 3 and the collection portion 2 of the residual feed recovery device 1 according to the modification.

The hook-and-loop fastener 30 is provided on the lower surface of the support plate 10 of the collection portion 2. The hook-and-loop fastener 30 provided on the support plate 10 is the same type of hook-and-loop fastener as the hook-and-loop fastener 25b provided on the upper lid portion 22. When the recovery portion 3 is attached to the collection portion 2, the hook-and-loop fastener 25a provided on the attachment plate 21 of the recovery portion 3 is attached to the hook-and-loop fastener 30 provided on the lower surface of the support plate 10. When the first opening 20a is blocked, the hook-and-loop fastener 25a provided on the attachment plate 21 of the recovery portion 3 is attached to the hook-and-loop fastener 25b provided on the upper lid portion 22. That is, the hook-and-loop fastener 25a provided on the attachment plate 21 of the recovery portion 3 is used for attaching the recovery portion 3 and the collection portion 2 and for blocking the first opening 20a by the upper lid portion 22.

As a result, the residual feed recovery device 1 according to the modification can attach the recovery portion 3 to the collection portion 2 with a simple configuration.

Note that a plurality of recovery portions 3 may be provided. The plurality of recovery portions 3 is provided side by side in a direction orthogonal to the up-down direction. In addition, a plurality of collection portions 2 and a plurality of recovery portions 3 may be provided. That is, the plurality of residual feed recovery devices 1 may be provided side by side in a direction orthogonal to the up-down direction.

In addition, since the feed to be dropped can be reduced regardless of the situation, the present invention can contribute to the achievement of Goal 9 "Industry, Innovation, and Infrastructure" of the Sustainable Development Goals (SDGs).

Further effects and modifications can be easily derived by those skilled in the art. Thus, the broader aspects of the present invention are not limited to the specific details and representative embodiments presented and described above. Accordingly, various changes may be made without departing from the spirit or scope of the general inventive concept as defined by the appended claims and their equivalents.

### Reference Signs List

- 1: RESIDUAL FEED RECOVERY DEVICE
- 2: COLLECTION PORTION
- 3: RECOVERY PORTION
- 5: INSERTION GROOVE
- 10: SUPPORT PLATE
- 11: ATTACHMENT FRAME
- 12: ROTATION SUPPORT PORTION
- 13: STRUT PORTION
- 14: SHEET PORTION
- 20: BODY PORTION
- 21: ATTACHMENT PLATE (INSERTION PORTION)
- 22: UPPER LID PORTION (LID PORTION)
- 24: BACKFLOW PREVENTION VALVE
- 24a: VALVE BODY
- 25: FIXATION PORTION
- 25a: HOOK-AND-LOOP FASTENER
- 25b: HOOK-AND-LOOP FASTENER
- 30: HOOK-AND-LOOP FASTENER
- 100: FISH PEN

## Claims

1. A residual feed recovery device comprising:
a collection portion that is attached below a fish pen provided in water and becomes narrower as the collection portion goes downward; and
a recovery portion that recovers residual feed passing through the fish pen and gathered by the collection portion, and is attachable to and detachable from the collection portion,
wherein
an opening through which the residual feed enters from the collection portion is formed in the recovery portion, and
the recovery portion includes a backflow prevention valve that prevents the recovered residual feed from coming out from the opening to the collection portion.

2. The residual feed recovery device according to claim 1, wherein
the recovery portion includes
a body portion in which the opening is formed, and
a lid portion capable of blocking the opening.

3. The residual feed recovery device according to claim 2, wherein
the recovery portion includes a fixation portion that holds a blocked state of the opening when the opening is blocked by the lid portion.

4. The residual feed recovery device according to claim 1, wherein the collection portion is openable and closable.

5. The residual feed recovery device according to claim 4, wherein
the collection portion includes
a rotation support portion,
a strut portion rotatably provided on the rotation support portion, and
a sheet portion attached to the strut portion and opening and closing in accordance with rotation of the strut portion.

6. The residual feed recovery device according to claim 1, wherein
the collection portion includes an attachment frame forming an insertion groove, and
the recovery portion includes an insertion portion insertable into the insertion groove.

7. The residual feed recovery device according to claim 1, wherein the recovery portion is attached to the collection portion by hook-and-loop fasteners.
